# EUROPEAN PATENT SPECIFICATION

(11) **EP 3 274 831 B1**
(45) Date of publication and mention of the grant of the patent: **20.10.2021**
(21) Application number: 16773670.1
(22) Date of filing: 26.02.2016
(51) Int. Cl.: G06F 9/455, G06F 9/48

(54) **APPLICATION CONTAINER FOR LIVE MIGRATION OF MOBILE APPLICATIONS**
ANWENDUNGSCONTAINER ZUR LIVE-MIGRATION MOBILER ANWENDUNGEN
CONTENEUR D'APPLICATIONS POUR LA MIGRATION EN TEMPS RÉEL D'APPLICATIONS MOBILES

(30) Priority: 27.03.2015 US 201514671680
(43) Date of publication of application: 31.01.2018
(73) Proprietor: Intel Corporation, Santa Clara, CA 95054 (US)
(72) Inventor: DAS, Abhinav, San Jose, CA 95125 (US); SHUKLA, Saurabh S., Santa Clara, CA 95054 (US); LI, Wei, Palo Alto, CA 94301 (US); LAVERY, Daniel M., Cupertino, CA 95014 (US)
(74) Representative: Rummler, Felix
(86) International application number: PCT/US2016/019774
(87) International publication number: WO 2016/160204

(56) References cited:
- US-A1- 2012 227 058
- US-B1- 8 539 488
- ANOLAN MILAN\'ES ET AL: "Heterogeneous Strong Computation Migration", ARXIV.ORG, CORNELL UNIVERSITY LIBRARY, 201 OLIN LIBRARY CORNELL UNIVERSITY ITHACA, NY 14853, 22 December 2006 (2006-12-22), XP080265262, DOI: 10.1002/CPE.1287
- ANOLAN MILANES ET AL.: 'Heterogeneous Strong Computation Migration' CONCURRENCY AND COMPUTATION: PRACTICE AND EXPERIENCE, [Online] vol. 20, 22 December 2006, pages 1485 - 1508, XP080265262 Retrieved from the Internet: <URL:https://www.lncc.br/pdf_consultar.php? idt_arquivo=476&mostrar=1&teste=1>
- JOSE SIMAO ET AL.: 'A Checkpointing-enabled and Resource-Aware Java VM for Efficient and Robust e- Science Applications in Grid Environments' CONCURRENCY AND COMPUTATION: PRACTICE AND EXPERIENCE, [Online] vol. 24, no. ISSUE, pages 1421 - 1442, XP055318432 Retrieved from the Internet: <URL:http://www.gsd.inesc-id.pt/-lveiga/pap ers/34-crm-oo-vm-journal.pdf>
- RAFAEL FERNANDES LOPES ET AL.: 'Migration Transparency in a Mobile Agent Based Computational Grid' PROCEEDINGS OF THE 5TH WSEAS INT. CONF. ON SIMULATION, MODELING AND OPTIMIZATION, [Online] 17 August 2005, CORFU, GREECE, pages 33 - 36, XP055318433 Retrieved from the Internet: <URL:http://www.wseas.us/e-library/conferen ces/2005corfu/cl/papers/498-741.pdf>

## Description

### CROSS-REFERENCE TO RELATED APPLICATIONS

The present application claims the benefit of priority to U.S. Non-Provisional Patent Application No. 14/671,680 filed on March 27, 2015.

### TECHNICAL FIELD

Embodiments generally relate to application migration. More particularly, embodiments relate to application containers for live migration of mobile applications.

### BACKGROUND

Live migration of an application may involve the transfer of a running application from one platform (e.g., mobile device) to another (e.g., smart television/TV). Current live migration solutions may freeze the running application, checkpoint the application, the underlying operating system (OS) and/or virtual machine (VM) and all services upon which the application depends, and attempt to restore the checkpointed information on the other platform. Such an approach may therefore migrate information that is hardware specific such as, for example, graphics state information that is specific to each hardware implementation and its associated library code. As a result, conventional live migration tools may present challenges with regard to hardware compatibility across platforms. Indeed, excessive checkpointing may result in suboptimal performance for mobile devices that run on minimal hardware resources.

"Heterogeneous Strong Computation Migration" by Milanés A et al [CONCURRENCY AND COMPUTATION: PRACTICE AND EXPERIENCE, vol. 20, 22 December 2006 (2006-12-22), pages 1485-1508] relates to migration in hetergeneous environments, related implementation issues and alleged solutions.

### STATEMENTS OF INVENTION

In accordance with the present invention, there is provided an application migration apparatus as set out in claim 1 and a method of migrating live applications as set out in claim 8. Other aspects of the invention can be found in the dependent claims.

### BRIEF DESCRIPTION OF THE DRAWINGS

The various advantages of the embodiments will become apparent to one skilled in the art by reading the following specification and appended claims, and by referencing the following drawings, in which:
FIG. 1 is a block diagram of an example of an operating system according to an embodiment;
FIGs. 2A and 2B are illustrations of an example of a memory layout of a conventional managed runtime and an example of a memory layout according to an embodiment, respectively;
FIG. 3 is a flowchart of an example of a method of migrating a live application according to an embodiment;
FIGs. 4A and 4B are flowcharts of examples of methods of operating a container according to an embodiment;
FIG. 5 is an illustration of an example of a set of a state rebuilding communications according to an embodiment;
FIG. 6 is a block diagram of an example of a migration of a container having a version mismatch according to an embodiment;
FIG. 7 is a block diagram of an example of a version mismatch solution according to an embodiment; and
FIG. 8 is a block diagram of an example of an application migration apparatus according to an embodiment.

### DESCRIPTION OF EMBODIMENTS

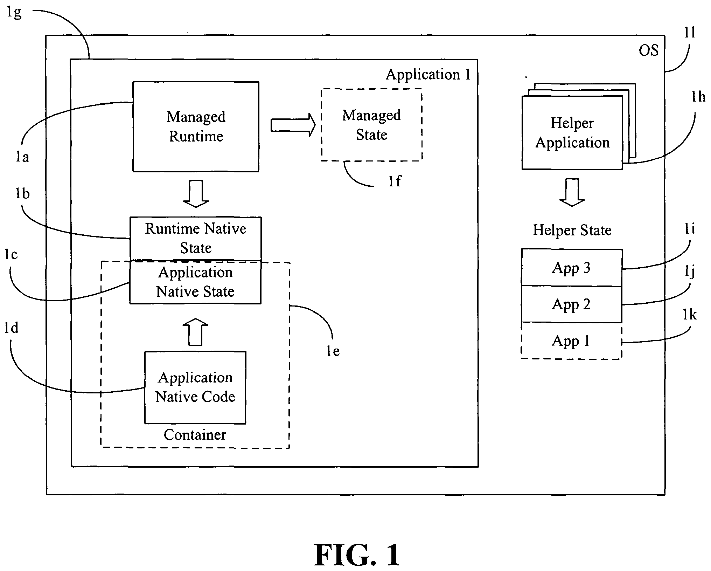

Turning now to FIG. 1, a mobile operating system (OS) 11 is shown running a mobile application 1g such as, for example, a game, media player, social networking application, and so forth, wherein the illustrated mobile application 1g includes a managed runtime environment 1a (e.g., "managed runtime"). In one example, the mobile application 1g is an ANDROID (GOOGLE, Inc.) application. The managed runtime environment 1a may be a high level solution such as, for example, HTML5 (Hypertext Markup Language 5, e.g., HTML5 Editor's Draft 8 May 2012, W3C), Dalvik (ANDROID Open Handset Alliance/OHA), ART (ANDROID Runtime, OHA), C# (e.g., C# 5.0, MICROSOFT Corp., August 15, 2012), .NET (e.g., .NET Framework 4.5, MICROSOFT Corp., October 17, 2013), Ruby (e.g., Ruby 2.1.0, Y. Matsumoto, December 25, 2013), Perl (e.g., Perl 5.18.2, Perl.org, January 7, 2014), Python (e.g., Python 3.3.3, Python Software Foundation, November 19, 2013), JAVA (e.g., JAVA Standard Edition 7 Update 51, ORACLE Corp., January 14, 2014), etc., or other virtual machine (VM) that provides runtime compilation as an additional level of abstraction between the application layer and the OS 11 running with the managed runtime environment 1a.

During execution the illustrated mobile application 1g creates an application managed state If. Additionally, the managed runtime environment 1a may create a managed runtime native state 1b. The mobile application 1g may also include application native code Id that creates native state data 1c (e.g., "native state"). In the illustrated example, the application native code Id executes inside a container 1e that isolates the native code Id and the native state data 1c from the managed runtime native state 1b (which may include hardware specific state data). The operating system 11 may also have a number of helper services 1h running, wherein the helper services 1h may interact with the mobile application 1g. The helper services 1h may save some helper state 1k pertaining to the mobile application 1g (in addition to helper state 1i, 1j, pertaining to other applications).

Thus, when a live migration event is detected, the managed runtime environment 1a may use a checkpointer (not shown) to checkpoint the managed state If, the container 1e may checkpoint the application native code Id and the native state data 1c, and the helper services 1h may checkpoint the helper state 1k. The checkpointed state may be transferred to another device. Of particular note is that the managed runtime 1a may naturally support the rebuilding of the native state 1b on the new device without encountering hardware compatibility problems. Moreover, checkpointing only the application information in the container 1e rather than the full system may improve performance for mobile devices that run on minimal hardware resources. As will be discussed in greater detail, the container 1e may be a binary translation (BT) container that emulates and/or controls execution of the native code 1d.

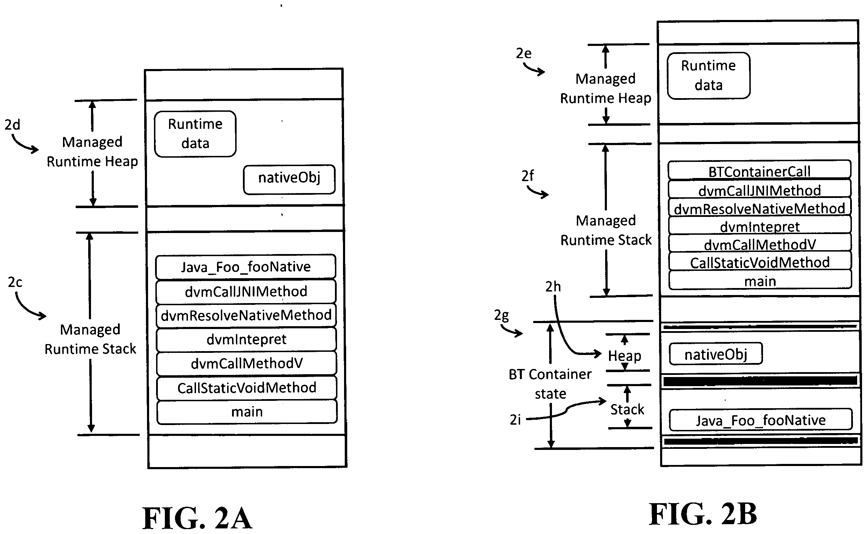

FIG. 2A shows a memory layout of a conventional managed runtime, such as, for example the managed runtime environment 1a (FIG. 1), that has dispatched a call into application native code, such as, for example the native code Id (FIG. 1). Below is an example of application native code that is a function (e.g., "Java_Foo_fooNative") in the C language that is allocating an object (e.g., "nativeObj").

```
         #include <Jni.h>
         JNIEXPORT void JNICALL Java FoofooNative
            (JNIEnv *env, j object clazz)
         {
                    void *nativeObj = malloc(size);
         }
```

As shown in FIG. 2A, a managed runtime stack 2c holds the stack frames for the runtime and the stack frame for the Java_Foo_fooNative function. A managed runtime heap 2d holds the data allocated by the runtime and also the object allocated by the Java_Foo_fooNative function. A problem with the illustrated conventional solution is that the runtime's native state (stack and heap) is not isolated from the application's native state (stack and heap). By contrast, FIG. 2B demonstrates that isolation of the managed runtime native state and the application native state may be achieved by emulating the application native code Id (FIG. 1) in a BT container. The BT container may manage a native region 2g for its own state, wherein the illustrated region 2g includes space for a stack 2i and a heap 2h. Instead of calling the Java_Foo_fooNative function, the managed runtime calls "BTContainerCall" as shown in the managed runtime stack 2f. The function BTContainerCall may begin emulation of Java_Foo_fooNative, which results in allocation of nativeObj in the BT container heap 2h. A managed runtime heap 2e may continue to store runtime data. Thus, the application native state associated with a running mobile application is isolated from the managed runtime's native state as shown in the illustrated example.

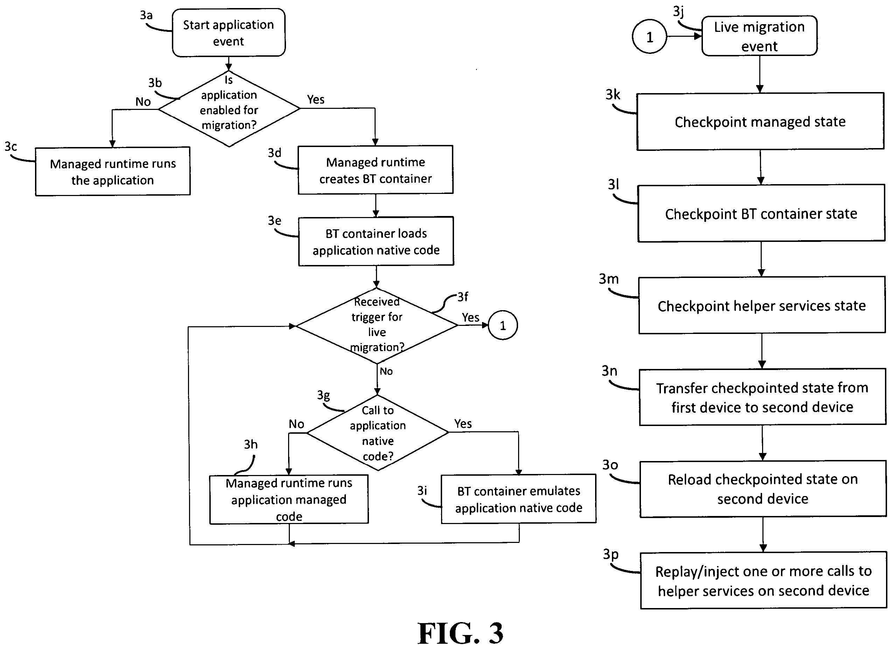

Turning now to FIG. 3, a method 3a of starting and running a mobile application enabled for live application is shown and a method 3j of migrating application state from a first device to second device is shown. The methods 3a and 3j may be a mechanism implemented as one or more modules in a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality hardware logic using circuit technology such as, for example, application specific integrated circuit (ASIC), complementary metal oxide semiconductor (CMOS) or transistor-transistor logic (TTL) technology, or any combination thereof. For example, computer program code to carry out operations shown in methods 3a and 3j may be written in any combination of one or more programming languages, including an object oriented programming language such as C#, JAVA or the like.

FIG. 3 generally illustrates the process of isolating native information from managed runtime native information. The native information may be associated with a mobile application running in a managed runtime environment and the mobile application may be identified at processing block 3b as a live migration candidate, wherein applications that are not enabled for migration may be run by the managed runtime at block 3c. The native information may include native code and native state data. As will be discussed in greater detail, block 3g may include dispatching one or more native function calls (e.g., the Java_Foo_fooNative function discussed above) to a binary translation (BT) container that manages resources (e.g., including stack and heap allocations), wherein the resources are dedicated to the application native information (e.g., the resources include a memory pool that excludes the managed runtime native information and application managed state). Thus, the memory pool may include a native region such as, for example, the native region 2g (FIG. 2), already discussed. Block 3d may also include passing one or more wrapper function pointers to the BT container, wherein the one or more wrapper function pointers correspond to one or more managed runtime functions (e.g., JAVA Native Interface/JNI functions). The wrapper function pointers may generally cause the BT container to suspend container-controlled execution (e.g., emulation) and call the corresponding one or more managed runtime functions. Illustrated block 3e provides for using the BT container to load the application native code.

A determination may be made at block 3f as to whether a live migration event has occurred. The live migration event might include, for example, an interrupt, request, message or other condition change associated with the transfer of the mobile application from a first device to the second device while the mobile application is running. Thus, the mobile application may be a game being played by a user on a tablet computer, wherein the user might issue a request (e.g., by pressing a button, shaking the tablet computer, speaking a command, etc.) to migrate the game to a smart TV while keeping the game in its current state (e.g., not having to start the game over). If a live migration event is not detected at block 3f, the running of the application continues at block 3h after which the determination of live migration event is again performed. More particularly, a determination may be made at block 3g as to whether a call to application native code has been made. If so, the BT container may emulate the application native code at block 3i. Otherwise, illustrated block 3h provides for using the managed runtime to run application managed code, as already noted.

If a live migration event is detected, illustrated blocks 3k, 31 and 3m checkpoint managed state, BT container state, and helper services state, respectively. Block 3n may transfer the checkpointed native information from a first (e.g., originating) device to a second (e.g., destination) device. Block 3n may include transmitting (e.g., via wireless and/or wired communication) the checkpointed native information directly to the second device, requesting a remote device and/or server to transmit the checkpointed native information to the second device, and so forth. Illustrated block 3o reloads the transferred state on the second device. One or more calls (e.g., a sequence of ten calls made while the mobile application is running on the first device) to helper services may be replayed on the second device at block 3p, wherein replaying the calls may enable the helper services running on the second device to rebuild the state of the mobile application.

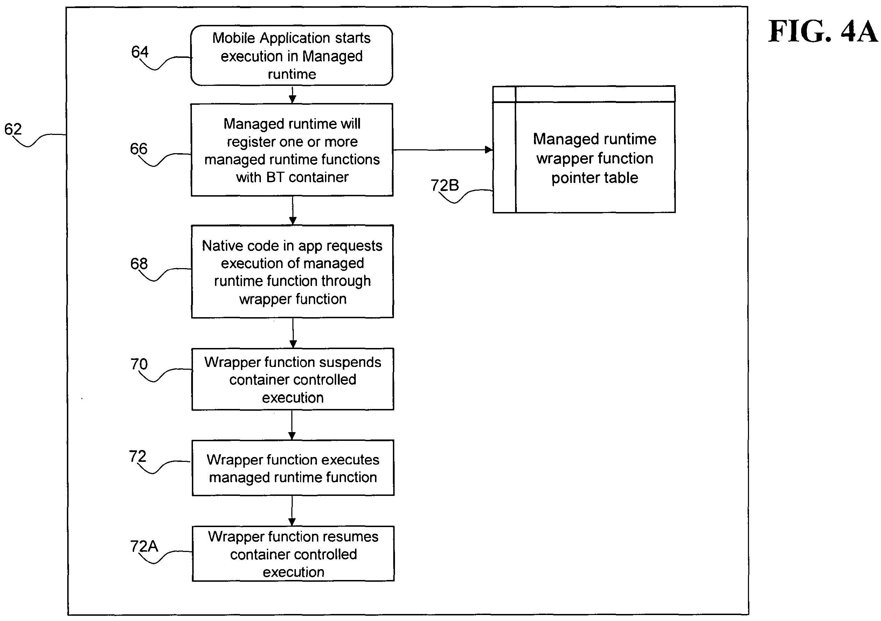

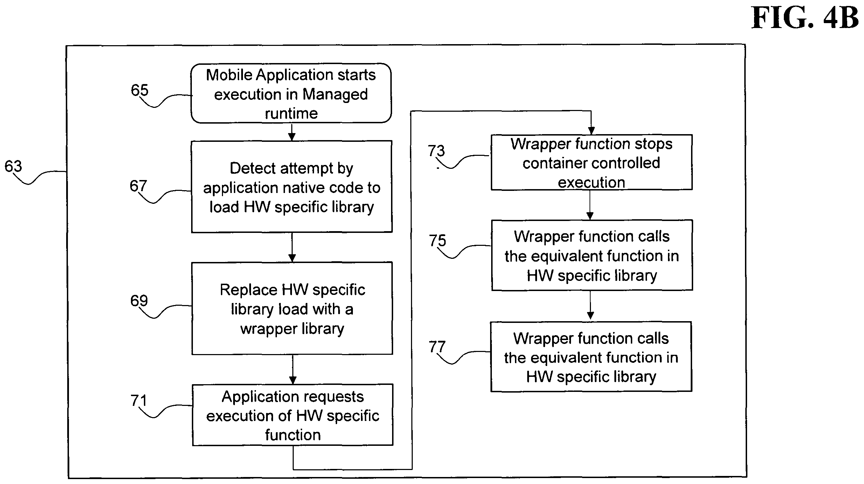

FIGs. 4A and 4B show methods 62 and 63, respectively, of operating a container. The methods 62 and 63 may generally be a mechanism implemented in an application container such as, for example, the application container 1e (FIG. 1), already discussed. More particularly, the methods 62 and 63 may be implemented as one or more modules in a set of logic instructions stored in a machine- or computer-readable storage medium such as RAM, ROM, PROM, firmware, flash memory, etc., in configurable logic such as, for example, PLAs, FPGAs, CPLDs, in fixed-functionality hardware logic using circuit technology such as, for example, ASIC, CMOS or TTL technology, or any combination thereof.

As already noted, the container may be implemented as a BT container that generally isolates the execution of the application native code from the managed runtime code and isolates the application native state data from the managed runtime native state data. One or more managed runtime functions may be registered with the BT container by means of providing wrapper functions for each of those managed runtime functions. With regard to FIG. 4A, a mobile application starts execution in managed runtime at block 64 and illustrated block 66 provides for receiving/registering one or more wrapper function pointers corresponding to one or more managed runtime functions via a managed runtime wrapper function table 72B. When native application code requests execution of one or more managed runtime functions at illustrated block 68, container-controlled execution of application native code may be suspended at block 70. Block 72 may call the corresponding one or more managed runtime functions and pass returned values back to the container code. Container-controlled execution may resume at block 72A.

With regard to FIG. 4B, a mobile application may start execution of a managed runtime at block 65 and illustrated block 67 detects an attempt by native code in the container to load a hardware (HW) specific library. The container may load a wrapper library that is interface equivalent to the HW specific library inside the container, as illustrated in block 69. The application may continue execution and in the future may request one or more functions in the HW specific library at block 71. Container-controlled execution (e.g., emulation) may be suspended at block 73 by the wrapper library function and the actual HW specific library function is called as illustrated in block 75. Illustrated block 77 passes returned values back to the native code in the container and resumes container-controlled execution.

In general, the illustrated method 63 takes into consideration the hardware differences between two devices involved in a live application migration. More particularly, processing block 75 may call one or more hardware specific functions outside the container. As an example, the BT container may detect when the application native code tries to load a hardware specific graphics library such as, for example, the OpenGL library "libEGL.so", and instead load "libEGL-wrapper.so". The wrapper library will have the same functions defined in the original library. Accordingly, when the emulated code calls any one of the wrapper functions, the BT container may suspend emulation and transfer control to the managed runtime, which calls the corresponding function in the hardware specific library. When the function returns, the BT container may pass the returned value back to the emulated code and resume emulation.

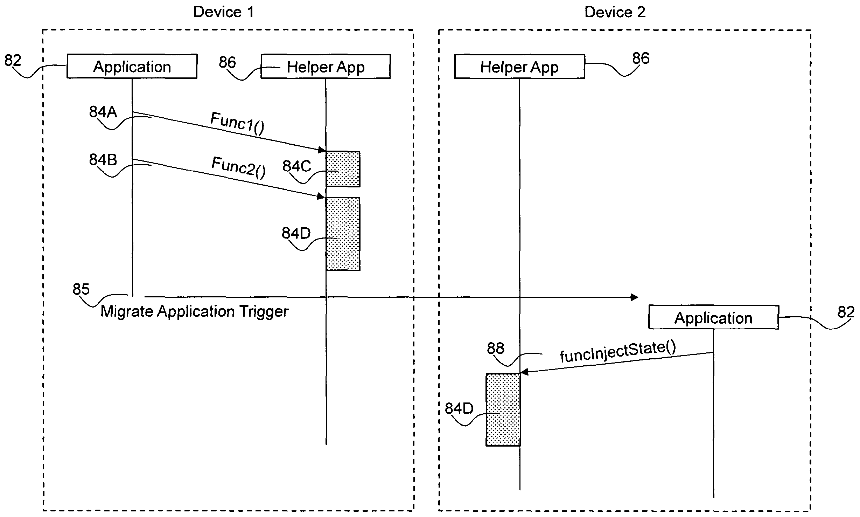

Turning now to FIG. 5, a set of state rebuilding communications is shown for application state residing in helper services that are usually system defined services. In the illustrated example, prior to migration, a mobile application 82 running on a first device ("Device 1") issues a series of function calls 84A and 84B that create state 84C and 84D, respectively, in a helper service 86. A trigger 85 may initiate migration of the application 82 from Device 1 to a second device ("Device 2"), which already has its own helper service 86 running. After migration to Device 2, the illustrated mobile application 82 regenerates state in the helper service 86 of Device 2 so that the helper service 86 can continue to provide support for the application 82 on Device 2. The helper service may be modified to add support for this functionality with a new API (application programming interface) call 88 (e.g., "funcInjectState"). During application initialization, the new API that is called may regenerate state using a replay of "Func1()" and "Func2()" calls or a direct transfer/copy of the state 84D from Device 1 to Device 2. In one example, an ANDROID OS has several helper services such as Activity Manager, Window Manager and others that may be modified to support the new API call for state injection as described herein.

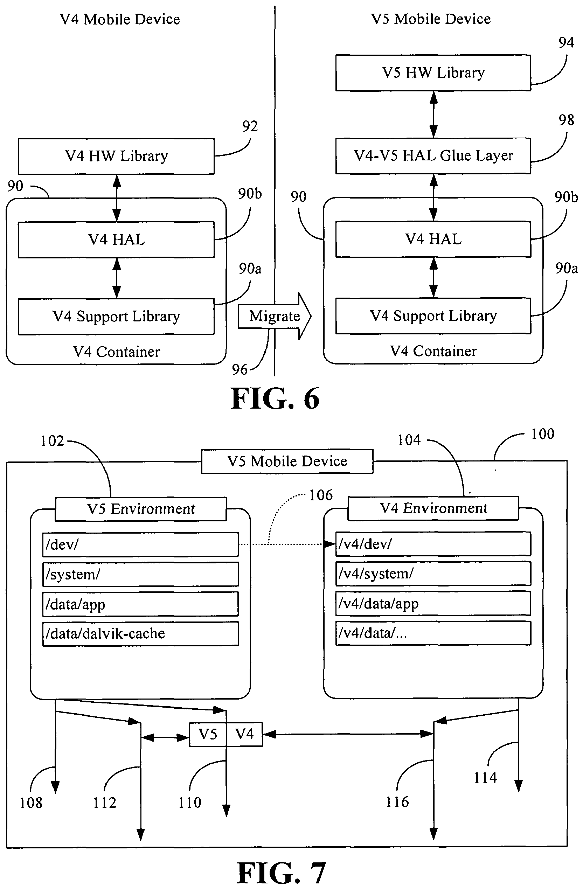

FIG. 6 shows a live migration 96 of a particular version level (e.g., version four/V4) container 90 (90a, 90b) having a version mismatch after migration. In the illustrated example, the container 90 includes a V4 support library 90a that interacts with a V4 hardware abstraction layer (HAL) 90b (e.g., container interface). The illustrated HAL 90b is a layer of software that connects applications with HW specific libraries such as those required for graphics, audio, sensors, etc., using a well-defined API. The illustrated V4 HAL 90b in turn interacts with a V4 hardware (HW) library 92 on a V4 mobile device prior to migration. After the live migration 96 of the V4 container 90 to a higher version level (e.g., version five/V5) mobile device having a V5 HW library 94, the V4 container 90 uses a V4-V5 HAL "Glue Layer" 98 to interact with the V5 HW library 94. In particular, a migration apparatus will detect the version mismatch between the first device (e.g., the V4 mobile device) and the second device (e.g., the V5 mobile device). The migration apparatus on the V5 mobile device will then load the application in a V4 container 90 on the V5 mobile device. One or more hardware specific calls will go through the HAL of V4, which will now communicate with the V4-V5 glue layer 98 before communicating with V5 HW library 94. Libraries and code are also maintained in a sub-path where version dependencies are satisfied as per requirements of the V4 mobile device. For example, if V4 code attempts to load a library such as, for example, "libfoo.so", instead of loading the library from the sub-path "/system/lib/libfoo.so", the library may be loaded from "/v4/system/lib/libfoo.so". Thus, the illustrated V4 container 90 provides a convenient separation for HAL libraries that may have symbol dependencies with specific versions of the mobile application.

FIG. 7 shows a version mismatch solution for a migrated application when it communicates with helper services on the V5 mobile device. Helper services (such as, for example, system services) are generally not duplicated as they hold HW resources and other system-wide resources. A V5 mobile device 100 may therefore include both a V5 environment 102 (e.g., V5 JAVA virtual machine) and a V4 environment 104 (e.g., V4 JAVA virtual machine) to support live migration of applications from a V4 device. The V5 environment 102 may include a sub-path structure that maps 106 to a corresponding sub-path structure in the V4 environment 104. The V5 environment 102 may also include an application launcher 108 (e.g., Zygote daemon in the case of ANDROID) that launches system-wide services, such as an activity manager 110 in the case of ANDROID, as well as one or more mobile applications 112 (e.g., Application #1). The illustrated activity manager 110 has been modified to support both the V4 API (application programming interface) and the V5 API. The V4 environment 104 also has an application launcher 114 to launch applications that have live migrated from V4 device. A V4 application 116 will communicate with system-wide services, such as the activity manager 110. The activity manager 110 and other helper services may be modified to support the V4 API and the application 116 will communicate on this interface. The V5 applications will communicate on the V5 API and these helper services will maintain state of V4 and V5 applications, in the illustrated example.

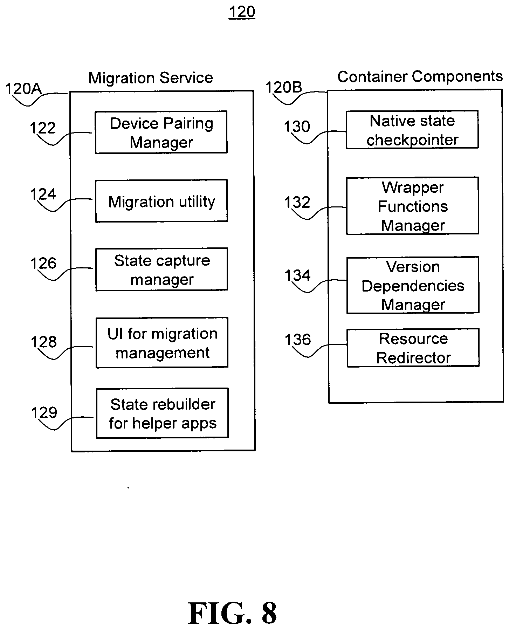

FIG. 8 shows an application migration apparatus 120 (120A-120B). The application migration apparatus 120 may perform one or more aspects of methods in FIG. 3, already discussed. In the illustrated example, a mechanism such as a set of container components 120B isolate native information from managed runtime information, wherein the native information is associated with a mobile application running in a managed runtime environment. The illustrated set of container components 120B includes a checkpointer 130 to checkpoint the native application information and send this to a migration service 120A (e.g., a migrator), wherein the migration service 120A may transfer the checkpointed native information from a first device to a second device in response to a live migration event. The illustrated set of container components 120B also includes a wrapper function manager 132 to dispatch one or more managed runtime and HW specific calls to functions in the mobile operating environment outside the container after suspending container controlled execution. In one example, the migration service 120A includes a state rebuilder 129 to build state of migrated application by replaying one or more calls to helper services on the second device or by injecting state directly into these helper services.

As already noted, the native information may also include version data. The set of container components 120B may therefore also include a version dependencies manager 134 to detect a mismatch between the first device and the second device, wherein a resource redirector 136 may redirect one or more resource specific calls to a resource sub-path where version dependencies are maintained. The illustrated migration service 120A also includes a pairing manager 122 to maintain paired devices that support migration, a migration utility 124 to enable transfer of state from one device to another and a state capture manager 126. The state capture manager 126 may be responsible for collecting application state from various parts of the system, serializing it and sending it to the migration utility. A user interface (UI) 128 for migration may enable the user to visualize the migration at various points of migration, as well as to enable and disable migration of applications and trigger/cancel migration.

Thus, techniques described herein may identify state data relevant for migration and isolate it so that it may be easily checkpointed. The checkpointed state may then be transferred to another device, where after reloading the checkpointed state into memory and re-initializing (using replay) if needed, the mobile application may restart from precisely the same point where it was checkpointed. In one example, binary translation is used to identify and isolate the mobile application's native code and state and ANDROID framework support may be used to re-initialize libraries and rebuild state in helper services.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of' may mean any combination of the listed terms. For example, the phrases "one or more of A, B or C" may mean A, B, C, A and B, A and C, B and C, or A, B and C.

Those skilled in the art will appreciate from the foregoing description that the broad techniques of the embodiments can be implemented in a variety of forms. The invention is defined by the appended independent claims. The dependent claims define preferred embodiments.

## Claims

1. An application migration apparatus (120) comprising:
a container (1e, 90) that manages resources dedicated to application native information including application native code (1d) and application native state data (1c), the container having a set of container components (120B) configured to isolate native information from managed runtime information (1b) by emulating the application native code, wherein the application native information is to be associated with a mobile application running in a managed runtime environment;
a container interface (90b) configured to dispatch one or more native function calls to a container, wherein the container interface is configured to pass one or more wrapper function pointers to the container (90), wherein the one or more wrapper function pointers correspond to one or more managed runtime functions and are configured to cause the container to:
suspend emulation of the application native code;
call the corresponding one or more managed runtime functions; and
resume emulation of the application native code when one or more values are returned to the container from the one or more managed runtime functions;
a first checkpointer (130) to checkpoint the application native information; and
a migrator (120A) to transfer the checkpointed application native information from a first device to a second device in response to a live migration event.

2. The apparatus of claim 1, wherein the container further includes:
a wrapper function to call one or more hardware specific functions outside the container, wherein the container interface is to receive one or more wrapper function pointers from a mobile operating environment; and
a wrapper manager to manage functions of hardware dependent libraries and their associated resources.

3. The apparatus of any of claims 1 or 2, wherein the container is a binary translation container.

4. The apparatus of claim 1, further including a state rebuilder to replay or inject one or more calls to helper services on the second device.

5. The apparatus of claim 1, further including a second checkpointer to checkpoint application managed state, wherein the migrator is to migrate the application managed state (1f).

6. The apparatus of claim 1, wherein the native information is to include version data and the apparatus further includes:
a version dependency manager to detect a mismatch between the first device and the second device based on the version data; and
a resource redirector to redirect one or more hardware specific calls to a sub-path where version dependencies are maintained, wherein one or more helper services include modifications to recognize and interact with applications that have a version mismatch with a current device.

7. The apparatus of any one of claims 1 to 6, wherein the mobile application is to include an ANDROID application and the managed runtime environment is to include a JAVA virtual machine.

8. A method (3a, 3j) of migrating live applications, comprising:
passing (3d) one or more wrapper function pointers to a container (90) that manages resources dedicated to application native information, the application native information including application native code and application native state data and being associated with a mobile application running in a managed runtime environment, wherein the one or more wrapper function pointers correspond to one or more managed runtime functions and cause the container to:
suspend (70) emulation of the application native code;
call (72) the corresponding one or more managed runtime functions; and
resume (72A) emulation of the application native code when one or more values are returned to the container from the one or more managed runtime functions;
dispatching (3g) one or more native function calls to the container (90);
emulating (3i) the application native code in the container to isolate native information from managed runtime information, wherein the native information is associated with a mobile application running in a managed runtime environment;
checkpointing (31) the application native information; and
transferring (3n) the checkpointed application native information from a first device to a second device in response to a live migration event.

9. The method of claim 8, further including:
calling one or more hardware specific functions outside the container;
receiving one or more wrapper function pointers from a mobile operating environment; and
managing functions of hardware dependent libraries and their associated resources.

10. The method of any of claims 8 or 9, wherein the container is a binary translation container.

11. At least one computer readable storage medium comprising a set of instructions which, when executed by a processor, cause the processor to perform the method of any one of claims 8 to 10

## Patentansprüche

1. Anwendungsmigrationsgerät (120), umfassend:
einen Container (le, 90), der Ressourcen verwaltet, die für anwendungsnative Informationen, die anwendungsnativen Code (1d) und anwendungsnative Zustandsdaten (lc) enthalten, vorgesehen sind, wobei der Container einen Satz von Containerkomponenten (120B) aufweist, die konfiguriert sind, native Informationen von verwalteten Laufzeitinformationen (1b) durch Emulieren des anwendungsnativen Codes zu isolieren, wobei die anwendungsnativen Informationen mit einer mobilen Anwendung, die in einer verwalteten Laufzeitumgebung ausgeführt wird, assoziiert werden soll;
eine Containerschnittstelle (90b), die konfiguriert ist, einen oder mehrere native Funktionsaufrufe an einen Container zu senden, wobei die Containerschnittstelle konfiguriert ist, einen oder mehrere Wrapper-Funktionszeiger an den Container (90) zu leiten, wobei der eine oder die mehreren Wrapper-Funktionszeiger mit einer oder mehreren verwalteten Laufzeitfunktionen korrespondieren und konfiguriert sind, den Container zu veranlassen zum:
Aussetzen der Emulation des anwendungsnativen Codes;
Aufrufen des oder der korrespondierenden einen oder mehreren verwalteten Laufzeitfunktionen; und
Wiederaufnehmen der Emulation des anwendungsnativen Codes, wenn ein oder mehrere Werte an den Container von der einen oder den mehreren verwalteten Laufzeitfunktionen zurückgegeben werden;
einen ersten Fixpunktmarkierer (130) zum Fixpunktmarkieren der anwendungsnativen Informationen; und
einen Migrator (120A) zum Übertragen der fixpunktmarkierten anwendungsnativen Informationen von einer ersten Vorrichtung an eine zweite Vorrichtung als Reaktion auf ein Live-Migrationsereignis.

2. Gerät nach Anspruch 1, wobei der Container ferner enthält:
eine Wrapper-Funktion zum Aufrufen einer oder mehrerer hardwarespezifischen Funktionen außerhalb des Containers, wobei die Containerschnittstelle einen oder mehrere Wrapper-Funktionszeiger von einer mobilen Betriebsumgebung empfangen soll; und
einen Wrapper-Manager zum Verwalten von Funktionen von hardwareabhängigen Bibliotheken und ihren assoziierten Ressourcen.

3. Gerät nach einem der Ansprüche 1 oder 2, wobei der Container ein binärer Übersetzung-Container ist.

4. Gerät nach Anspruch 1, ferner enthaltend einen Zustandswiederhersteller zum Wiederholen oder Injizieren eines oder mehrerer Aufrufe an Hilfsdienste in der zweiten Vorrichtung.

5. Gerät nach Anspruch 1, ferner enthaltend einen zweiten Fixpunktmarkierer zum Fixpunktmarkieren eines anwendungsverwalteten Zustands, wobei der Migrator den anwendungsverwalteten Zustand (1f) migrieren soll.

6. Gerät nach Anspruch 1, wobei die nativen Informationen Versionsdaten enthalten sollen und das Gerät ferner enthält:
einen Versionsabhängigkeitsmanager zum Detektieren einer Nichtübereinstimmung zwischen der ersten Vorrichtung und der zweiten Vorrichtung basierend auf den Versionsdaten; und
einen Ressourcenumleiter zum Umleiten eines oder mehrerer hardwarespezifischer Aufrufe zu einem Unterpfad, in dem Versionsabhängigkeiten aufrechterhalten werden, wobei ein oder mehrere Hilfsdienste Modifikationen zum Erkennen von und Interagieren mit Anwendungen, die eine Versionsnichtübereinstimmung mit einer gegenwärtigen Vorrichtung aufweisen, enthalten.

7. Gerät nach einem der Ansprüche 1 bis 6, wobei die mobile Anwendung eine ANDROID-Anwendung enthalten soll und die verwaltete Laufzeitumgebung eine virtuelle JAVA-Maschine enthalten soll.

8. Verfahren (3a, 3j) zum Migrieren von Live-Anwendungen, umfassend:
Leiten (3d) eines oder mehrerer Wrapper-Funktionszeiger an einen Container (90), der Ressourcen verwaltet, die für anwendungsnative Informationen vorgesehen sind, wobei die anwendungsnativen Informationen anwendungsnativen Code und anwendungsnative Zustandsdaten enthalten und mit einer mobilen Anwendung, die in einer verwalteten Laufzeitumgebung ausgeführt wird, assoziiert sind, wobei der eine oder die mehreren Wrapper-Funktionszeiger mit einer oder mehreren verwalteten Laufzeitfunktionen korrespondieren und den Container veranlassen zum:
Aussetzen (70) der Emulation des anwendungsnativen Codes;
Aufrufen (72) der korrespondierenden einen oder mehreren verwalteten Laufzeitfunktionen; und
Wiederaufnehmen (72A) der Emulation des anwendungsnativen Codes, wenn ein oder mehrere Werte an den Container von der einen oder den mehreren verwalteten Laufzeitfunktionen zurückgegeben werden;
Senden (3g) eines oder mehrerer nativer Funktionsaufrufe an den Container (90);
Emulieren (3i) des anwendungsnativen Codes in dem Container, um native Informationen von verwalteten Laufzeitinformationen zu isolieren, wobei die nativen Informationen mit einer mobilen Anwendung, die in einer verwalteten Laufzeitumgebung ausgeführt wird, assoziiert sind;
Fixpunktmarkieren (3i) der anwendungsnativen Informationen; und
Übertragen (3n) der fixpunktmarkierten anwendungsnativen Informationen von einer ersten Vorrichtung an eine zweite Vorrichtung als Reaktion auf ein Live-Migrationsereignis.

9. Verfahren nach Anspruch 8, ferner enthaltend:
Aufrufen einer oder mehrerer hardwarespezifischen Funktionen außerhalb des Containers;
Empfangen eines oder mehrerer Wrapper-Funktionszeiger von einer mobilen Betriebsumgebung; und
Verwalten von Funktionen von hardwareabhängigen Bibliotheken und ihren assoziierten Ressourcen.

10. Verfahren nach einem der Ansprüche 8 oder 9, wobei der Container ein binärer Übersetzung-Container ist.

11. Mindestens ein computerlesbares Speichermedium, das einen Satz von Anweisungen umfasst, die, wenn sie durch einen Prozessor ausgeführt werden, den Prozessor veranlassen, das Verfahren nach einem der Ansprüche 8 bis 10 durchzuführen.

## Revendications

1. Appareil de migration d'application (120) comprenant :
un contenant (le, 90) qui gère des ressources dédiées à des informations natives d'application incluant un code natif d'application (1d) et des données d'état natives d'application (1c), le contenant ayant un ensemble de composants de contenant (120B) configurés pour isoler des informations natives des informations de temps d'exécution gérées (1b) par l'émulation du code natif d'application, les informations natives d'application devant être associées à une application mobile fonctionnant dans un environnement de temps d'exécution géré ;
une interface de contenant (90b) configurée pour répartir un ou plusieurs appels de fonction natifs vers un contenant, l'interface du contenant étant configurée pour faire passer un ou plusieurs pointeurs de fonction d'enveloppe au contenant (90), le ou les plusieurs pointeurs de fonction d'enveloppe correspondant à une ou plusieurs fonctions de temps d'exécution gérées et étant configurés pour amener le contenant à :
suspendre l'émulation du code natif d'application ;
appeler la ou les plusieurs fonctions de temps d'exécution gérées correspondantes ; et
reprendre l'émulation du code natif d'application lorsqu'une ou plusieurs valeurs sont retournées au contenant à partir de la ou des plusieurs fonctions de temps d'exécution gérées ;
un premier pointeur de contrôle (130) pour contrôler les informations natives d'application ; et
un migrateur (120A) pour transférer les informations natives d'application contrôlées d'un premier dispositif à un second dispositif en réponse à un événement de migration en direct.

2. Appareil selon la revendication 1, dans lequel le contenant inclut en outre :
une fonction d'enveloppe pour appeler une ou plusieurs fonctions spécifiques au matériel à l'extérieur du contenant, l'interface du contenant servant à recevoir un ou plusieurs pointeurs de fonction d'enveloppe provenant d'un environnement de fonctionnement mobile ; et
un gestionnaire d'enveloppe pour gérer des fonctions de librairies dépendant du matériel et leurs ressources associées.

3. Appareil selon l'une quelconque des revendications 1 ou 2, dans lequel le contenant est un contenant de translation binaire.

4. Appareil selon la revendication 1, incluant en outre un reconstructeur d'état pour rejouer ou injecter un ou plusieurs appels à des services d'aide sur le second dispositif.

5. Appareil selon la revendication 1, incluant en outre un second pointeur de contrôle pour contrôler un état géré d'application, le migrateur servant à migrer l'état géré d'application (1f) .

6. Appareil selon la revendication 1, dans lequel les informations natives doivent inclure des données de version et l'appareil inclut en outre :
un gestionnaire de dépendance de version pour détecter une non-concordance entre le premier dispositif et le second dispositif sur la base des données de version ; et
un redirecteur de ressources pour rediriger un ou plusieurs appels spécifiques au matériel vers un sous-trajet où des dépendances de version sont maintenues, un ou plusieurs services d'aide incluant des modifications pour reconnaître et interagir avec des applications qui présentent une non-concordance de version avec un dispositif actuel.

7. Appareil selon l'une quelconque des revendications 1 à 6, dans lequel l'application mobile doit inclure une application ANDROID et l'environnement de temps d'exécution géré doit inclure une machine virtuelle JAVA.

8. Procédé (3a, 3j) de migration d'applications en direct, comprenant :
le passage (3d) d'un ou plusieurs pointeurs de fonction d'enveloppe à un contenant (90) qui gère des ressources dédiées à des informations natives d'application, les informations natives d'application incluant un code natif d'application et des données d'état natives d'application, et étant associées à une application mobile fonctionnant dans un environnement de temps d'exécution géré, le ou les plusieurs pointeurs de fonction d'enveloppe correspondant à une ou plusieurs fonctions de temps d'exécution gérées et amenant le contenant à :
suspendre (70) l'émulation du code natif d'application ; appeler (72) la ou les plusieurs fonctions de temps d'exécution gérées correspondantes ; et
reprendre (72A) l'émulation du code natif d'application lorsqu'une ou plusieurs valeurs sont retournées au contenant à partir de la ou des plusieurs fonctions de temps d'exécution gérées ;
répartir (3g) un ou plusieurs appels de fonction natifs vers le contenant (90) ;
émuler (3i) le code natif d'application dans le contenant pour isoler des informations natives les informations de temps d'exécution gérées, les informations natives étant associées à une application mobile fonctionnant dans un environnement de temps d'exécution géré ;
contrôler (31) les informations natives d'application ; et
transférer (3n) les informations natives d'application contrôlées d'un premier dispositif à un second dispositif en réponse à un événement de migration en direct.

9. Procédé selon la revendication 8, incluant en outre :
l'appel d'une ou plusieurs fonctions spécifiques au matériel à l'extérieur du contenant ;
la réception d'un ou plusieurs pointeurs de fonction d'enveloppe provenant d'un environnement de fonctionnement mobile ; et
la gestion des fonctions de librairies dépendant du matériel et de leurs ressources associées.

10. Procédé selon l'une quelconque des revendications 8 ou 9, dans lequel le contenant est un contenant de translation binaire.

11. Au moins un support de stockage lisible par ordinateur comprenant un ensemble d'instructions qui, lorsqu'elles sont exécutées par un processeur, amènent le processeur à mettre en œuvre le procédé selon l'une quelconque des revendications 8 à 10.
